# EUROPÄISCHE PATENTANMELDUNG

(11) **EP 2 161 486 A2**
(43) Veröffentlichungstag der Anmeldung: **10.03.2010**
(21) Anmeldenummer: 09405148.9
(22) Anmeldetag: 04.09.2009
(51) Int. Cl.: F16L 25/00

(54) **Rohrmuffe**

(30) Priorität: 08.09.2008 CH 14302008
(71) Anmelder: Morach, Christoph, 8335 Hittnau (CH)
(72) Erfinder: Morach, Christoph, 8335 Hittnau (CH)
(74) Vertreter: Frei Patent Attorneys

(57) **Zusammenfassung**

Eine Rohrmuffe (1) zum Anschluss an ein an der Aussenseite glattes oder geripptes Rohr (2) weist auf:
■ eine Öffnung (4) zum Einstecken eines Rohres (2),
■ eine elastische Dichtung (9) zum Herstellen einer im wesentlichen luftdicht abgedichteten Verbindung zwischen der Rohrmuffe (1) und einem eingesteckten Rohr (2),
■ einen Anschlag (10) zur Begrenzung der Bewegung eines eingesteckten Rohres (2),

wobei ein Dichtungsbereich (11) der Dichtung (9) am Ende eines eingesteckten Rohres (2) anliegt.

Vorzugsweise weist die Rohrmuffe (1) ein gegen die Innenseite der Rohrmuffe (1) weisendes Rastelement (5) zum einrastenden Festhalten eines gerippten Rohres (2) auf. Der Dichtungsbereich (11) der Dichtung (9) ist zwischen dem Anschlag (10) und dem Rastelement (5) angeordnet.

## Beschreibung

Die Erfindung liegt auf dem Gebiet der Verbindung von Rohren, insbesondere von gerippten Rohren. Sie bezieht sich auf eine Rohrmuffe gemäss dem Oberbegriff des Patentanspruches 1.

### STAND DER TECHNIK

Elektro- und Datenkabel werden vorwiegend durch erdverlegte Rohre gezogen. Um zwei Rohre nahtlos zusammenzuführen werden Muffen eingesetzt. Zum Teil werden die Kabel mit Druckluft eingeblasen. Das bedingt, dass die Rohre auch an den Stossstellen dicht sind. Ebenfalls ist es ein Wunsch, dass kein Wasser, Sand oder andere Partikel in die Rohre eindringen können. Zum Teil werden die Rohrverbindungen durch das Anlegen eines Luftdruckes auf ihre Dichtheit geprüft. In Lüftungsanlagen werden ähnlich geartete flexible Kunststoffrohre eingesetzt, die natürlich auch luftdicht miteinander verbunden werden sollen.

Die verwendeten Rohre sind an der Aussenseite glatt oder gerippt und weisen Durchmesser von 8 cm bis 20 cm oder mehr auf. Zum Verbinden solcher Rohre untereinander oder zum Anschluss an Verteilkästen werden Verbindungsmuffen oder Anschlussmuffen eingesetzt. Um eine zumindest annähernd luftdichte Verbindung zwischen Muffe und Rohr zu erzielen, wird beispielsweise ein O-Ring an der Innenseite einer Muffe angeordnet. Beim Einstecken eines Rohres in eine Muffe wird das Rohr zuerst durch den O-Ring hindurch gepresst. Anschliessend kann das Rohr, falls es gerippt ist, in einer innerhalb des Rohres angeordneten Raste einrasten. Bei anderen Muffen muss der O-Ring über das glatte oder gerippte Rohr gestülpt werden und dann zusammen mit dem Rohr in die Muffe eingeführt werden. In der Regel sind bei den bekannten Muffen die Verbindungskräfte relativ hoch, wobei das Rohr von Beginn weg mit grossem Kraftaufwand in die Muffe geschoben werden muss. Die O-Ringe können verrutschen und damit nicht mehr korrekt dichten. Die Lage des Rohres in der Muffe nach dem Einschieben ist nicht klar definiert, nicht bekannt, und kann nicht überprüft werden.

GB 2 107 814 A zeigt ein Endstück eines Schlauches aus einem Elastomer, welcher zum Einstecken eines gerippten Rohres vorgesehen ist. Dazu ist das Endstück korrespondierend zu den Rippen des Rohres geformt. EP 1 769 183 B1 offenbart einen in Zweikomponententechnik hergestellten Anschlussstutzen für Wellrohre, mit einer zylindrischen Dichtung und anschliessend (in Einsteckrichtung des Rohres) an die Dichtung angeordneten Einrastelementen zum Zurückhalten eines eingesteckten Rohres. In beiden Fällen besteht das Problem der relativ hohen Kräfte beim Einstecken und der unbekannten Lage des Rohres nach dem Einstecken.

CH 645 448 und CH 696 553 A5 zeigen Anschlussstutzen zum Anschluss eines gerippten Rohres, bei welchem das Rohr in eine Öffnung des Stutzen hinein und gegen eine am Ende der Öffnung liegende Dichtung geführt wird. Das Rohr wird mittels eines in radialer Richtung in den Stutzen und um das Rohr führendes, C-förmiges Halteelement am Herausziehen gehindert. Das separate Halteelement kann verloren gehen.

US 2004/0036284 beschreibt eine Steckverbindung zwischen Rohren, an welcher ein erstes Kupplungsstück ein Rohr mit einem umlaufenden Flansch aufweist. Beim Einstecken in ein zweites Kupplungsstück fährt das Ende des Rohres in eine Dichtung des zweiten Kupplungsstückes ein, und der weiter hinten am Rohr liegende Flansch rastet an einem lösbaren Rastelement ein. Die Verwendung mit gerippten Rohren ist aber nicht möglich.

### DARSTELLUNG DER ERFINDUNG

Es ist deshalb Aufgabe der Erfindung, eine Rohrmuffe der eingangs genannten Art zu schaffen, welche die oben genannten Nachteile behebt. Weitere Aufgaben der Erfindung sind, eine Rohrmuffe zu schaffen,
■ die einfach und günstig herzustellen ist;
■ die ohne Schulung oder Vorkenntnisse fachgerecht angebracht werden kann;
■ die schnell und funktionssicher montiert werden kann;
■ bei welcher die richtige Rohrposition kontrolliert werden kann; und
■ mit welcher die Rohre sicher zusammengehalten werden.

Weitere Aufgaben der Erfindung sind, eine Rohrmuffe zu schaffen
■ mit der insbesondere gerippte Rohre sicher gehalten werden; und
■ bei welcher die Verbindung mit einem eingesteckten und gehaltenen Rohr wieder mit einfachen Mitteln lösbar ist.

Diese Aufgaben löst eine Rohrmuffe mit den Merkmalen der Patentansprüche 1 oder 2.

Die Rohrmuffe zum Anschluss an ein an der Aussenseite glattes oder geripptes Rohr weist also auf
■ einen Rohrmuffen-Mantel mit einer Öffnung zum Einstecken eines Rohres,
■ eine elastische Dichtung zum Herstellen einer abgedichteten Verbindung zwischen der Rohrmuffe und einem eingesteckten Rohr,
■ einen Anschlag zur Begrenzung der Bewegung eines eingesteckten Rohres,
   wobei ein Dichtungsbereich der Dichtung am Ende eines eingesteckten Rohres anliegt.

Die Rohrmuffe zum Anschluss an ein an der Aussenseite geripptes Rohr aus Kunststoff weist auf:
■ eine Öffnung zum Einstecken eines Rohres,
■ eine elastische Dichtung zum Herstellen einer vorzugsweise im wesentlichen luftdicht abgedichteten Verbindung zwischen der Rohrmuffe und einem eingesteckten Rohr,
■ ein gegen die Innenseite der Rohrmuffe weisendes Rastelement zum einrastenden Festhalten eines eingesteckten Rohres an Rippen des Rohres,
■ einen Anschlag zur Begrenzung der Bewegung eines eingesteckten Rohres,
wobei ein Dichtungsbereich der Dichtung zwischen dem Anschlag und dem Rastelement angeordnet ist.

Ein Rohr wird also in einem Arbeitsgang, durch eine einzige Bewegung, d.h. durch das Einschieben, abgedichtet und fixiert, d.h. durch das Rastelement sicher gehalten. Die Rohre werden dadurch auch von ungeschulten Monteuren schnell und sicher verbunden.

Indem die Dichtung (in Bewegungsrichtung des eingeführten Rohres gesehen) erst nach dem Rastelement angeordnet ist, können die Rohre mit kleinem Kraftaufwand in die Muffe eingeführt werden. Erst gegen den Schluss des Montagevorgangs, wenn das Rohr im Bereich der Dichtung liegt, steigt die Kraft an. Die Dichtung wird dabei vorzugsweise über mehrere Rippen hergestellt, die an der Dichtung anliegen.

Vorzugsweise liegt die Dichtung am Ende eines eingesteckten Rohres an. Damit ist es möglich, das Rohr gegen die Dichtung zu stossen und eine Abdichtung zu erzielen, aber ohne dass das Rohr an der Dichtung vorbei geschoben werden muss.

Vorzugsweise weist die Dichtung einen als Innenkonus ausgebildeten Dichtungsbereich auf, welcher flach, mit einer nur geringen Neigung ansteigt respektive sich verengt. Dieser Dichtungsbereich liegt am Ende des eingesteckten Rohres an. Vorzugsweise fluchtet der Innenkonus an seiner offenen Seite mit der Innenwand des Rohrmuffen-Mantels. Das eingesteckte Rohr wird so durch den Mantel in den Innenkonus geführt. Vorzugsweise nimmt also die lichte Weite der Rohrmuffe beim Übergang vom Bereich des Rohrmuffen-Mantels zum Bereich der Dichtung nicht ab. Alternativ kann die lichte Weite nur um wenig, beispielsweise um maximal 2 mm oder, bei grossen lichten Weiten, um 3 mm oder 4 mm abnehmen. Eine Abnahme um 2mm entspricht also jeweils auf gegenüberliegenden Seiten einem Absatz von weniger als einem Millimeter. Es ist auch möglich, dass beim Übergang zur Dichtung die lichte Weite zunimmt und anschliessend, wegen der Konizität der Dichtung, wieder abnimmt und kleiner wird als im Bereich des Mantels. Es liegt jedenfalls im Dichtungsbereich keine wesentliche schrittweise Verengung der lichten Weite vor, an welcher ein eingestecktes Rohr hängen bleiben oder einrasten könnte.

Vorzugsweise nimmt der Bereich, in welcher die Dichtung in radialer Richtung komprimierbar ist, in axialer Richtung (gegen den Anschlag hin) an Dicke zu. Dieser komprimierbare Bereich ist entweder durch das elastische Material der Dichtung selber gefüllt, oder durch das Material der Dichtung und durch Hohlräume zwischen der Dichtung und dem Rohrmuffen-Mantel. Es ist also nicht ein Innenkonus am Rohrmuffen-Mantel geformt, gegen welchen eine Dichtung gleich bleibender Dicke gelegt ist. Durch die zunehmende Dicke des Bereiches, welcher nachgiebig ist, ist eine gute Abdichtung entlang der Länge der Dichtung möglich. Eine besondere Haltekraft muss die Dichtung nicht aufbringen, wenn ein Rastelement zum Halten des eingesteckten Rohres vorliegt.
In einer bevorzugten Ausführungsform der Erfindung ist die Rohrmuffe zum Verbinden zweier koaxialer Rohre gleichen Durchmessers ausgebildet, und ist die Dichtung für die beiden Rohre einstückig gebildet.

Vorzugsweise ist der Anschlag einstückig an die Dichtung angeformt. Der Anschlag ist beispielsweise als eine gegen das Innere des Dichtungsringes respektive der Muffe vorstehende Rippe ausgebildet. Beim Einsetzen eines Rohres stösst dieses also von einer Seite gegen diesen Anschlag, was für die einsteckende Person gut spürbar ist. Aufgrund der Rastverbindung mit der Kralle kann das Rohr anschliessend um etwa eine Rippenbreite zurückrutschen, liegt aber immer noch an einem ausreichend langen Bereich an der Dichtung an. Die gleiche Funktion wird in einer anderen Ausführungsform der Erfindung erreicht, indem eine als Anschlag dienende und nach innen weisende Rippe am Rohrmuffen-Mantels ausgeformt ist. Dann sind allerdings zwei separate Dichtungen zu beiden Seiten dieser Rippe vorzusehen.

Vorzugsweise ist die Dichtung in einer an der Innenseite der Rohrmuffe ausgebildete Dichtungsnut angeordnet. Dazu kann die Dichtung in die Nut eines einstückig oder eines zweiteilig hergestellten Rohrmuffen-Mantels eingelegt werden. In einer anderen Ausführungsform der Erfindung sind der Mantel und die Dichtung im Zweikomponenten-Spritzverfahren hergestellt. Dabei wird für die Dichtung respektive den Dichtbereich vorzugsweise ein geschlossenporiger Kunststoff verwendet, so dass eine gewisse Nachgiebigkeit vorliegt.

In einer bevorzugten Ausfükungsform der Erfindung weist die Dichtung an der der Innenseite der Rohrmuffe zugewandten Seite Aussparungen auf. Diese Aussparungen sind vorzugsweise ganz oder teilweise um die Aussenseite der Dichtung umlaufende Nuten. Die Aussparungen dienen vorzugsweise zwei Zwecken:
■ Einerseits kann an der Innenseite der Dichtungsnut mindestens ein Haltekörper angeformt sein, beispielsweise eine nach innen weisende Rippe oder ein nach innen weisender Abschnitt der Dichtungsnut (Haltekörper), welche(r) an einer Rippe der Dichtung (z.B. bei einer der Aussparungen der Dichtung) eingreift. Damit wird die Dichtung festgehalten und daran gehindert, beim Einstecken durch das Rohr in axialer Richtung mit dem Rohr mitbewegt zu werden. In einer anderen Ausführungsform der Erfindung ist der Haltekörper durch den Rand einer Vertiefung oder einer umlaufenden Nut gebildet, welche beim Zusammensetzen von zwei Teilen des Rohrmuffen-Mantels entsteht.
■ Andererseits liegt vorzugsweise bei mindestens einer der Aussparungen ein Hohlraum zwischen der Dichtung und der Innenseite der Rohrmuffe vor. Damit kann sich die Dichtung bei eingestecktem Rohr verformen und der Form des Rohres anpassen. Der Grad der Verformbarkeit kann durch die Form der Aussparungen eingestellt werden.

Um eine hinterschnittfreie Herstellung der einzelnen Teile zu ermöglichen, weist in einer weiteren bevorzugten Ausführungsform der Erfindung der Rohrmuffen-Mantel eine Mantelöffnung auf, welche sich über einen Teil des Dichtungsbereiches erstreckt, und ist die Rohrmuffe durch Einsetzen der Dichtung in den Mantel durch die Mantelöffnung hergestellt. In einer anderen Ausführungsform der Erfindung weist der Rohrmuffen-Mantel eine rohrförmige Mantelhülse auf, in welche die Dichtung eingesetzt ist, und an die mindestens ein rohrförmiger Mantelabschnitt an gesteckt ist. Damit ist es möglich, die Dichtung in die Mantelhülse einzusetzen und dann einen oder zwei Mantelabschnitte an, insbesonder über, die Mantelhülse zu stecken.

In einer bevorzugten Ausführungsform der Erfindung weist das Rastelement eine einstückig an die Rohrmuffe angeformte Kralle auf. Vorzugsweise ist dabei die Kralle über einen Krallenarm mit einer Wand respektive dem Mantel der Rohrmuffe elastisch bewegbar verbunden, und ist die Kralle von der Aussenseite der Muffe her lösbar. Die Einrastverbindung ist also von der Aussenseite der Muffe her lösbar. Da sich die Kralle ausserhalb des abzudichtenden Bereiches befindet, kann sie in einer Öffnung der Wand der Rohrmuffe angeordnet werden.

Vorzugsweise weist die Muffe genau ein Rastelement pro eingestecktes Rohr auf. Damit kann die Rastverbindung mit nur zwei Händen (und gegebenenfalls einem einfachen Werkzeug wie einem Schraubenzieher) gelöst werden.

In einer bevorzugten Ausführungsform der Erfindung ist mindestes ein Teil der Wand respektive des Mantels der Rohrmuffe durchsichtig. Diese Durchsichtigkeit kann erreicht werden, indem die Rohrmuffe aus transparentem Material gefertigt ist, oder indem die Rohrmuffe Kontrollöffnungen zur visuellen Kontrolle, wie weit ein Rohr eingesteckt ist, aufweist. Die Rohrposition ist dadurch optisch überprüfbar.

Die zu verbindenden Rohre und damit auch erfindungsgemässen Muffen können rund, oval, rechteckig oder anders geformt sein.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Querschnitt durch eine Rohrmuffe;
- Figur 2: eine Explosionszeichnung einer Rohrmuffe mit eingesetzten Rohren;
- Figur 3: einen Querschnitt durch eine Rohrmuffe mit eingesetzten Rohren;
- Figur 4: eine Aufsicht auf die Rohrmuffe der Figuren 1 bis 3;
- Figur 5: eine Ansicht der Rohrmuffe der Figuren 1 bis 4;
- Figur 6: eine Rohrmuffe mit einem einstückigen Rohrmuffen-Mantel;
- Figur 7: eine Rohrmuffe für ein rechteckiges Rohr;
- Figur 8: einen Detailquerschnitt mit Muffen-Mantel und Dichtung;
- Figur 9: einen Querschnitt durch eine Rohrmuffe mit einem geschlossenporigen Kunststoff;
- Figur 10: eine Explosionszeichnung einer mehrteiligen Rohrmuffe; und
- Figur 11: eine Ansicht eines Rohrmuffen-Mantels mit einer Öffnung zum Einsetzen einer Dichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

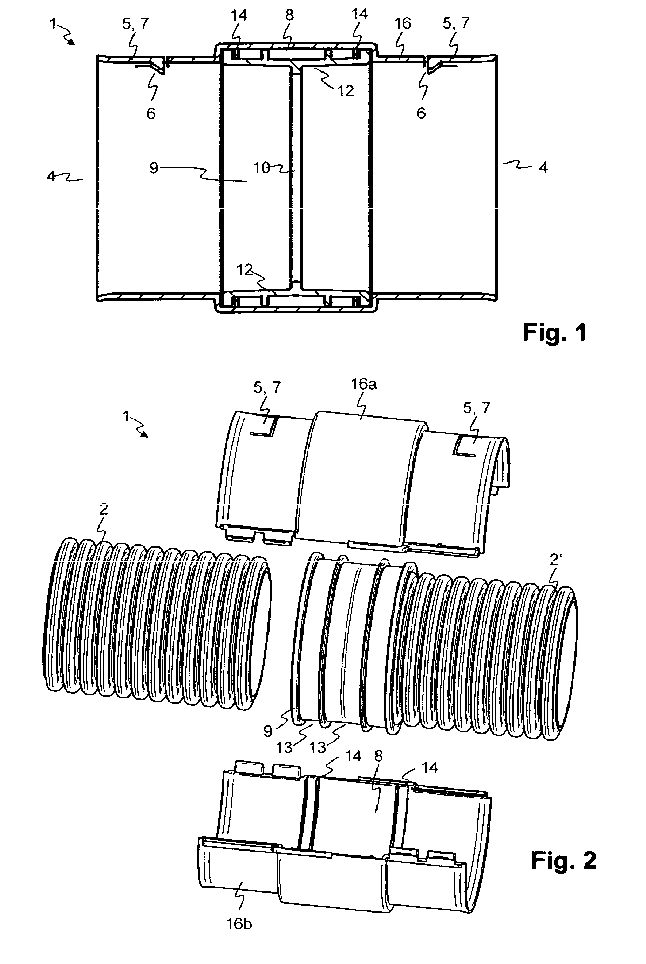

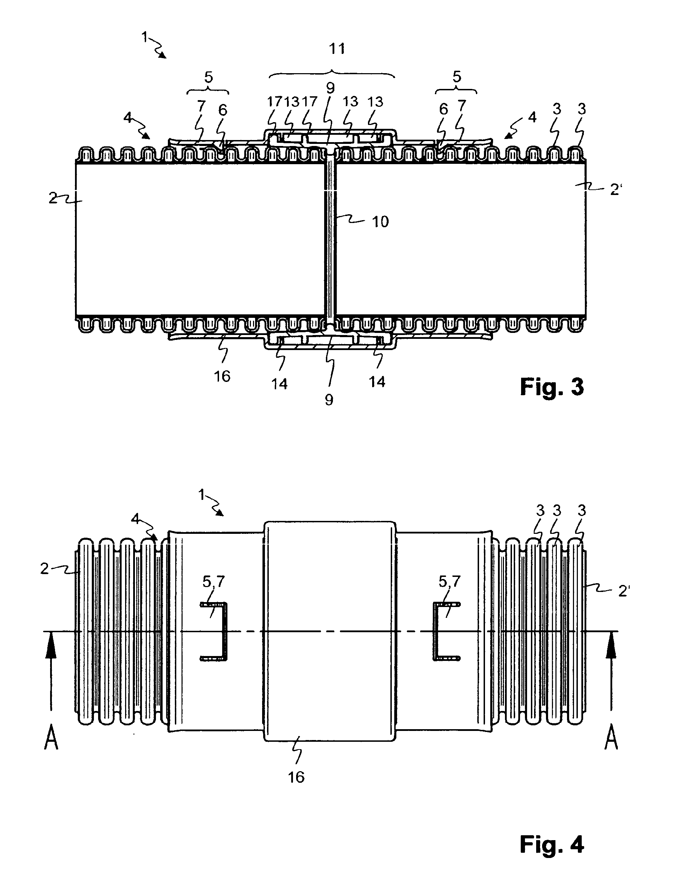

Die **Figuren 1** bis **5** zeigen eine Rohrmuffe 1 in verschiedenen Ansichten, mit und ohne eingesetzte Rohre 2, 2'. Die Rohrmuffe 1 weist jeweils ein Mantelrohr oder einen Rohrmuffenmantel 16 auf. Dieser kann einstückig oder mehrteilig sein. In einer bevorzugten Ausführungsform der Erfindung liegen zwei Hälften 16a und 16b vor, vorzugsweise identische Hälften. Diese zwei Hälften sind vorzugsweise identisch geformt, oder sind durch ein Filmscharnier zusammengehalten, und sind beispielsweise durch eine Schweiss-, Klebe-, Schraub- oder Schnappverbindung zusammengefügt. An den beiden Enden der Rohrmuffe 1 weist der Mantel 16 Öffnungen 4 auf, die sich leicht konisch oder trompetenförmig nach aussen öffnen, um das Einführen eines Rohres 2, 2' zu erleichtern.

In der Mitte des Mantels, in einer an der Innenseite des Mantels 16 ausgebildeten Dichtungsnut 8, ist eine ringförmige Dichtung 9 aus elastischem Material eingelegt. Die Dichtung kann auch eingeklebt werden, oder in einem Zweikomponenten-Spritzverfahren zusammen mit dem Mantel 16 geformt werden. Die Dichtung 9 weist eine nach innen, also gegen die Längsachse der Rohrmuffe 1, weisende Fläche auf, welche als Dichtungsbereich 11 wirkt. Der Dichtungsbereich 11 bildet mit einer Flanke der Dichtung einen sich von der Seite der Öffnung 4 her nach innen leicht verengenden Innenkonus 12. Der Innenradius im Bereich dieses Innenkonus 12 ist über einen grösseren Bereich entlang des Innenkonus 12 enger als der Aussenradius der einzusteckenden Rohre, so dass ein eingestecktes Rohr 2 gegen den Innenkonus abgedichtet wird.

Auf der Aussenseite der Dichtung 9 weist diese vorzugsweise umlaufende Aussparungen 13 auf. Diese erlauben dem Innenkonus, beim Einführen eines Rohres 2 elastisch nachzugeben. Die entsprechende Federkraft oder Nachgiebigkeit kann durch die Grösse der Aussparungen 13 respektive durch Anzahl und Breite von Rippen 17 der Dichtung 9 zur Abstützung des Innenkonus am Mantel 16 vorgegeben werden.

Der Mantel 16 weist in der Dichtungsnut 8 vorzugsweise hervorstehende Halterippen 14 auf. Diese liegen, in den Aussparungen 13, an hervorstehenden Rippen 17 der Dichtung 9 an und verhindern beim Einführung eines Rohres 2 eine gegenseitige Verschiebung in axialer Richtung zwischen Mantel 16 und Dichtung 9. Die gezeigte Anzahl und Anordnung von Aussparungen 13, Halterippen 14 und Rippen 17 der Dichtung 9 ist beispielhaft und kann je nach Dimension der Rohre 2 und Härte der Dichtung 9 variiert werden. In der gezeichneten bevorzugten Ausführungsform der Erfindung liegen jeweils Rippen 17 am axialen, vom Anschlag 10 beabstandeten Ende der Dichtung 9 vor. Dadurch wird die Dichtung 9 im äussersten Bereich, wo sie erstmals durch ein Rohr in axialer Richtung belastet wird, gehalten.

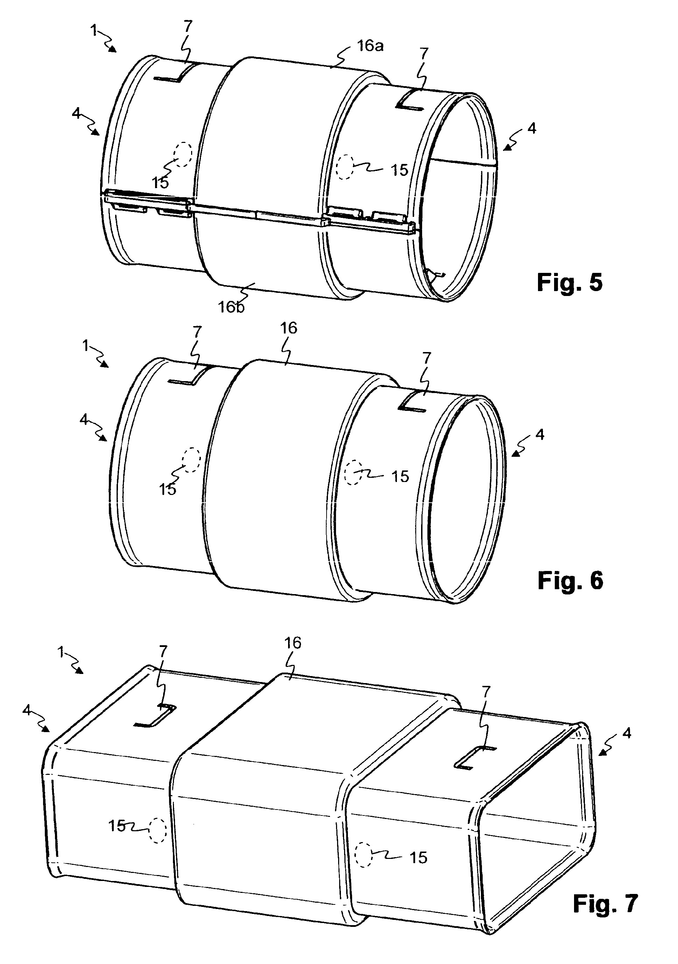

**Figur 6** zeigt eine Rohrmuffe mit einem einstückigen Rohrmuffen-Mantel. **Figur 7** zeigt eine rechteckige Rohrmuffe für ein rechteckiges Rohr.

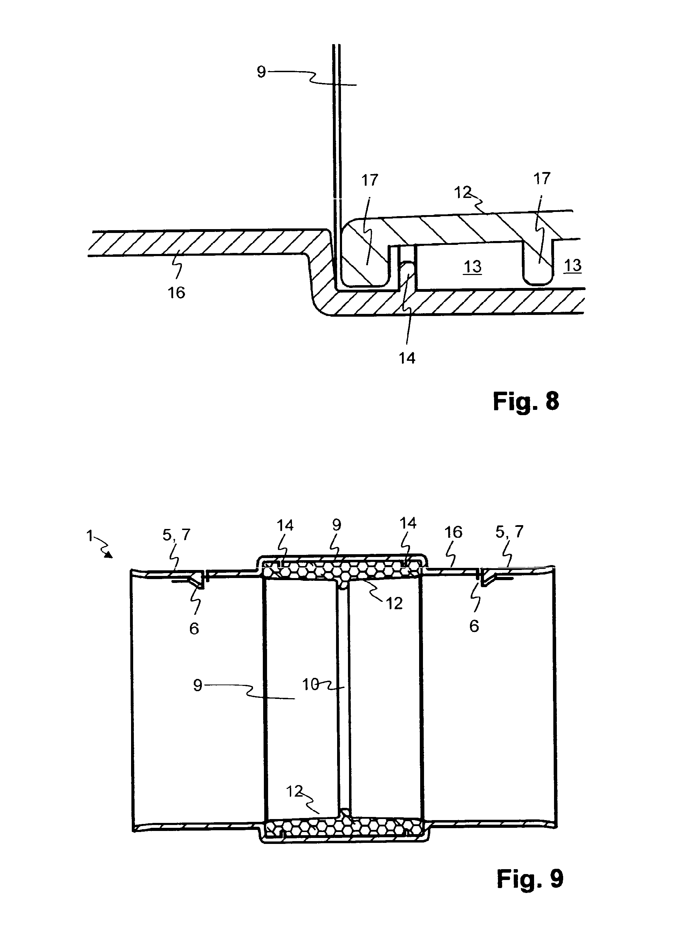

**Figur 8** zeigt einen Detailquerschnitt mit Mantel 16 und Dichtung 9. Beim Einschieben des Rohres wird die Dichtung 9 in axialer Richtung gehalten, indem die äusserste Rippe 17 der Dichtung 9 gegen eine Halterippe 14 stösst. Die Aussparungen 13, gestützt durch weitere, innere Rippen 17 der Dichtung 9, bewirken die Nachgiebigkeit der Dichtung 9 in radialer Richtung.

**Figur 9** zeigt einen Querschnitt durch eine Rohrmuffe 1 mit einer Dichtung 9 aus geschlossenporigem Kunststoff, wie er bei der Herstellung mittels eines Zweikomponenten-Spritzverfahrens zweckmässigerweise eingesetzt wird. Die Dichtung 9 erhält hier ihre Nachgiebigkeit durch die Porosität des Kunststoffes. Diese Herstellungsart eignet sich insbesondere für viereckige Rohre.

Die Dichtung 9 weist an der Innenseite einen Anschlag 10 auf, vorzugsweise einen umlaufenden und nach innen gerichtete Rippe. Beim Einschieben eines Rohres 2 wird seine Bewegung durch den Anschlag 10 begrenzt. In dieser Position ist das Rohr 2 auch durch die Dichtung 9 entlang des Dichtungsbereiches 11 gegenüber dem Mantel 16 abgedichtet.

Am Mantel 16 ist - zwischen Dichtungsbereich 11 und Öffnung 4 - auf jeder Seite vorzugsweise ein Rastelement 5 angeordnet. Dieses Rastelement 5 weist eine Kralle 6, welche über einen Krallenarm 7 beweglich am Mantel 16 befestigt ist. Vorzugsweise sind Krallenarm 7 und Kralle 6 einstückig als teil des Mantels 16 ausgeformt. Das Material des Mantels ist elastisch, vorzugsweise ein Kunststoff, so dass der Krallenarm 7, abhängig von seiner Länge und Breite, eine gewisse Nachgiebigkeit aufweist. Dadurch federt der Krallenarm 7 beim Einschieben eines Rohres 2 ein, wobei die Kralle 6 zwischen den Rippen 3 einrastet. In anderen Ausführungsformen der Erfindung, die für glattwandige Rohre vorgesehen sind, liegen keine Rastelemente vor. Dabei wird die Haltekraft durch die Dichtung erzielt, und/oder durch zusätzliche Mittel wie Klebebänder.

Beim Einschieben des Rohres 2 tritt während des grössten Teils eine gleichbleibende Gegenkraft, hervorgerufen durch das Rastelement 5, auf. Erst wenn das Rohr 2 auf die Dichtung 9 trifft, nimmt die Gegenkraft spürbar. Mit einem kontrollierten Druck kann dann das Rohr 2 entlang des Dichtungsbereiches 11 eingeschoben werden, bis es auf den Anschlag 10 trifft, was wiederum klar spürbar ist.

Da die Kralle 6 in einer Öffnung im Mantel 16 ausgeformt ist (im Gegensatz zu einer nur an der Innenseite des Mantels ausgebildeten Raste), ist sie von aussen her zugänglich. So kann sie zum Lösen der Einrastverbindung angehoben werden, beispielsweise mit einem Schraubenzieher. Vorzugsweise liegt je genau ein Rastelement 5 für ein eingestecktes Rohr 2 vor, so dass das Lösen mit nur zwei Händen möglich ist.

Vorzugsweise ist der Mantel 16 teilweise oder vollständig aus einem transparenten oder semitransparenten (beispielsweise milchig-transparenten) Material, oder weist Kontrollöffnungen 15 (strichliert gezeichnet) kurz vor dem Dichtungsbereich 11 respektive der Dichtungsnut 8 auf (in axialer Richtung und von aussen her gesehen). Beim Einschieben kann somit die Position des Rohres 2 kurz vor dem letzten Abschnitt kontrolliert werden, und mit einem kontrollierten Ruck das letzte Wegstück gegen den Anschlag gestossen werden.

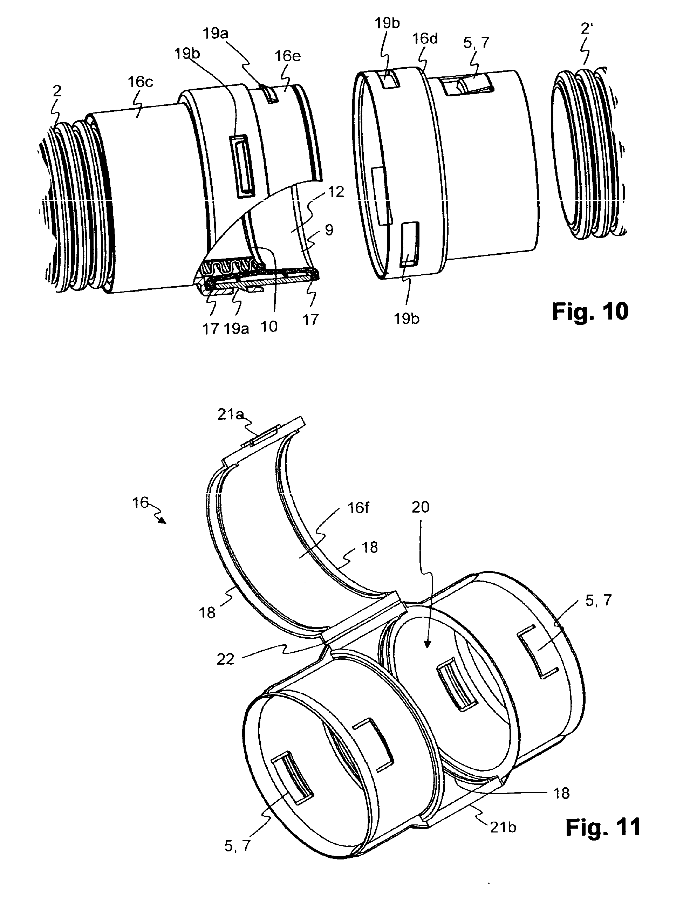

**Figuren 10** und **11** zeigen Ausführungsformen, welche eine hinterschnittfreie Herstellung der einzelnen Teile ermöglichen. Die Funktionsweise dieser Rohrmuffen 1, wenn sie einmal zusammengesetzt ist, ist dieselbe wie bei den vorangehenden Ausführungsformen.

**Figur 10** zeigt eine Explosionszeichnung einer mehrteiligen Rohrmuffe 1. Der Rohrmuffen-Mantel 16 weist hier eine rohrförmige Mantelhülse 16e auf, in welche die Dichtung 9 eingesetzt ist. Mindestens ein rohrförmiger Mantelabschnitt 16d, 16d ist an die Mantelhülse 16e gesteckt. Vorzugsweise ist der mindestens eine Mantelabschnitt 16d, 16d auf die Mantelhülse 16e *auf*gesteckt, d.h. dass im zusammengesteckten Zustand der mindestens eine Mantelabschnitt 16d, 16d die Mantelhülse 16e zumindest teilweise entlang der Länge der Mantelhülse 16e umschliesst.

Der Rohrmuffen-Mantel 16 weist einen rohrförmigen ersten Mantelabschnitt 16c zur Aufnahme eines ersten Rohres 2 auf. Die Mantelhülse 16e ist einstückig an den ersten Mantelabschnitt 16c angeformt oder an den ersten Mantelabschnitt 16c angesteckt oder aufgesteckt. Der Rohrmuffen-Mantel 16 weist einen zweiten rohrförmigen Mantelabschnitt 16d zur Aufnahme eines zweiten Rohres 2' auf, welcher an die Mantelhülse 16e gesteckt ist. Die Mantelhülse 16e verbindet somit den ersten und den zweiten Mantelabschnitt 16c, 16d und erstreckt sich in Längsrichtung, d.h. in axialer Richtung der Rohrmuffe 1 entlang des Dichtungsbereiches 11. Zwischen der Mantelhülse 16e und einem Mantelabschnitt 16c, 16d bleibt eine Randnut 18, in welcher die Rippe 17 der Dichtung 9 liegt.

Vorzugsweise ist die Verbindung zwischen Mantelhülse 16e und dem oder den Mantelabschnitten durch Schnappverbindungen hergestellt. Diese sind nicht dazu vorgesehen, wieder geöffnet zu werden. Die Schnappverbindungen weisen beispielsweise positive Schnappelemente 19a wie Haken auf, welche in negative Schnappelemente 19b wie Vertiefungen eingreifen. Im gezeigten Beispiel sind die negativen Schnappelemente 19b als Durchbrüche in den Umfang der Mantelabschnitte 16c, 16d dargestellt. Es sind vorzugsweise diese Schnappverbindungen nicht dazu vorgesehen, wieder geöffnet zu werden, so dass die negativen Schnappelemente 19b auch als von innen in die Wand der Mantelabschnitte 16c, 16d hineinreichende, aber nicht durchgängige Vertiefungen ausgestaltet sind. Auch können umgekehrt die negativen Schnappelemente an der Mantelhülse 16e und die positiven Schnappelemente an der oder den Mantelabschnitten 16c, 16d ausgebildet sein.

**Figur 11** zeigt eine Ansicht eines Rohrmuffen-Mantels mit einer Öffnung 20 zum Einsetzen der Dichtung 9. Die Mantelöffnung 20 ist mit einem eingesetzten Mantelteil 16f verschlossen. Das Mantelteil 16f ist einstückig aber um eine Scharnierelement 22 beweglich am Rohrmuffen-Mantel 16 angeformt, kann aber auch ein separates Teil sein. Vorzugsweise ist das Mantelteil 16f durch eine einrastende Verbindung mit Einrastelementen 21 a am Mantelteil 16f und mit korrespondierenden Einrastelementen 21 b am Rohrmuffen-Mantel 16 befestigt, und/oder durch Kleben oder Schweissen zum Verschliessen der Mantelöffnung 20 am Mantel 16 befestigt. Eine umlaufende Randnut 18 zur Aufnahme der Rippe 17 ist am Rohrmuffen-Mantel 16 und/oder am Mantelteil 16f angeformt.

Allgemein gilt, dass für eine Muffe, welche zum Anschluss an einen Verteilkasten ausgebildet ist, im Wesentlichen nur die eine Hälfte der jeweils abgebildeten Muffenteile (Mantel und Dichtung) vorliegt.

### BEZUGSZEICHENLISTE

- 1: Rohrmuffe
- 2, 2': Rohr
- 3: Rippe
- 4: Öffnung
- 5: Rastelement
- 6: Kralle
- 7: Krallenarm
- 8: Dichtungsnut
- 9: Dichtung
- 10: Anschlag
- 11: Dichtungsbereich
- 12: Innenkonus, Flanke
- 13: Aussparungen
- 14: Halterippe
- 15: Kontrollöffnung
- 16: Rohrmuffen-Mantel
- 16a, 16b: Mantelhälften
- 16c, 16d: Mantelabschnitt
- 16e: Mantelhülse
- 16f: Mantelteil, eingesetzt
- 17: Rippen der Dichtung
- 18: Randnut
- 19a: positives Schnappelement
- 19b: negatives Schnappelement
- 20: Mantelöffnung
- 21 a, 21 b: Elemente von Einrastverbindung
- 22: Scharnierelement

## Patentansprüche

1. Rohrmuffe (1) zum Anschluss an ein an der Aussenseite glattes oder geripptes Rohr (2), aufweisend
■ einen Rohrmuffen-Mantel (16) mit einer Öffnung (4) zum Einstecken eines Rohres (2),
■ eine elastische Dichtung (9) zum Herstellen einer abgedichteten Verbindung zwischen der Rohrmuffe (1) und einem eingesteckten Rohr (2),
■ einen Anschlag (10) zur Begrenzung der Bewegung eines eingesteckten Rohres (2),
wobei ein Dichtungsbereich (11) der Dichtung (9) am Ende eines eingesteckten Rohres (2) anliegt.

2. Rohrmuffe (1) gemäss Anspruch 1 zum Anschluss an ein an der Aussenseite geripptes Rohr (2), aufweisend
■ ein gegen die Innenseite der Rohrmuffe (1) weisendes Rastelement (5) zum einrastenden Festhalten eines eingesteckten Rohres (2),
wobei der Dichtungsbereich (11) der Dichtung (9) zwischen dem Anschlag (10) und dem Rastelement (5) angeordnet ist.

3. Rohrmuffe (1) gemäss Anspruch 1 oder 2, wobei die Dichtung (9) einen als Innenkonus ausgebildeten Dichtungsbereich (11) aufweist, und wobei vorzugsweise der Bereich, in welchem die Dichtung (9) in radialer Richtung komprimierbar ist, in axialer Richtung gegen den Anschlag (10) hin an Dicke zunimmt.

4. Rohrmuffe (1) gemäss einem der bisherigen Ansprüche, welche zum Verbinden zweier koaxialer Rohre (2, 2') gleichen Durchmessers ausgebildet ist, und in welcher die Dichtung (9) für die beiden Rohre (2, 2') einstückig gebildet ist.

5. Rohrmuffe (1) gemäss einem der bisherigen Ansprüche, wobei der Anschlag (10) einstückig an die Dichtung (9) angeformt ist.

6. Rohrmuffe (1) gemäss einem der bisherigen Ansprüche, wobei die Dichtung (9) in einer an der Innenseite des Rohrmuffen-Mantels (16) der Rohrmuffe (1) ausgebildeten Dichtungsnut (8) angeordnet ist.

7. Rohrmuffe (1) gemäss einem der bisherigen Ansprüche, wobei die lichte Weite der Rohrmuffe (1) beim Übergang vom Bereich des Rohrmuffen-Mantels (16) zum Bereich der Dichtung (9) um maximal 2 mm abnimmt, und vorzugsweise gar nicht abnimmt.

8. Rohrmuffe (1) gemäss einem der bisherigen Ansprüche, wobei der Rohrmuffen-Mantel (16) eine Mantelöffnung (20) aufweist, welche sich über einen Teil des Dichtungsbereiches (11) erstreckt, und die Rohrmuffe (1) durch Einsetzen der Dichtung (9) in den Mantel (16) durch die Mantelöffnung (20) hergestellt ist.

9. Rohrmuffe (1) gemäss Anspruch 8, wobei die Mantelöffnung (20) mit einem eingesetzten Mantelteil (16f) verschlossen ist und insbesondere das Mantelteil (16f) einstückig aber beweglich am Rohrmuffen-Mantel (16) angeformt ist.

10. Rohrmuffe (1) gemäss einem der Ansprüche 1 bis 10, wobei der Rohrmuffen-Mantel (16) eine rohrförmige Mantelhülse (16e) aufweist, in welche die Dichtung (9) eingesetzt ist, und mindestens ein rohrförmiger Mantelabschnitt (16d, 16d) an die Mantelhülse (16e) gesteckt ist.

11. Rohrmuffe (1) gemäss Anspruch 10, wobei der Rohrmuffen-Mantel (16) einen rohrförmigen ersten Mantelabschnitt (16c) zur Aufnahme eines ersten Rohres (2) aufweist, und die Mantelhülse (16e) einstückig an den ersten Mantelabschnitt (16c) angeformt ist oder an den ersten Mantelabschnitt (16c) angesteckt ist, und der Rohrmuffen-Mantel (16) einen zweiten rohrförmigen Mantelabschnitt (16d) zur Aufnahme eines zweiten Rohres (2') aufweist, welcher an die Mantelhülse (16e) gesteckt ist.

12. Rohrmuffe (1) gemäss Anspruch 6, wobei an der Innenseite der Dichtungsnut (8) mindestens ein Haltekörper (14) angeordnet ist, welcher mindestens gegen eine nach aussen vorstehende Rippe (17) an der Dichtung (9) angreift und eine Verschiebung der Rippe (17) in axialer Richtung begrenzt.

13. Rohrmuffe (1) gemäss einem der Ansprüche 2 bis 12, aufweisend genau ein Rastelement (5) pro eingestecktes Rohr (2, 2').

14. Rohrmuffe (1) gemäss einem der bisherigen Ansprüche, wobei mindestes ein Teil des Rohrmuffen-Mantels (16) durchsichtig ist, oder der Rohrmuffen-Mantel (16) aus transparentem Material gefertigt ist.

15. Rohrmuffe (1) gemäss einem der bisherigen Ansprüche, wobei Rohrmuffen-Mantel (16) und Dichtung (9) aus Kunststoff in einem Zweikomponenten-Spritzverfahren hergestellt sind, und die Dichtung (9) aus einem geschlossenporigen Kunststoff besteht.
